# EUROPÄISCHE PATENTANMELDUNG

(11) **EP 1 394 104 A2**
(43) Veröffentlichungstag der Anmeldung: **03.03.2004**
(21) Anmeldenummer: 03017919.6
(22) Anmeldetag: 06.08.2003
(51) Int. Cl.: C01B 3/38, C01B 3/48, B01J 19/00, B01J 8/04

(54) **Verfahren zum Betrieb eines Apparats zur Erzeugung von Wasserstoff und Apparat zur Erzeugung von Wasserstoff**

(30) Priorität: 20.08.2002 DE 10238988
(71) Anmelder: Viessmann Werke GmbH & Co KG, 35107 Allendorf (DE)
(72) Erfinder: Zartenar, Nicolas, 35091 Colbe (DE)
(74) Vertreter: Wolf, Günter, Dipl.-Ing.

(57) **Zusammenfassung**

Die Erfindung betrifft ein Verfahren und einen Apparat zur Erzeugung von Wasserstoff. Der Apparat besteht aus einen Reformer (1) zur Umwandlung von Kohlenwasserstoffgas und Wasser in die Reformer-Produkte Wasserstoff, Kohlendioxid und Kohlenmonoxid, wobei dem Reformer (1) zur Reduzierung des Kohlenmonoxidanteils mindestens eine Katalysatorstufe (3) nachgeschaltet und wobei zur Regulierung der Temperatur der Reformer-Produkt zwischen dem Reformer (1) und der Katalysatorstufe (3) ein Wärmetauscher (2) angeordnet ist, der seinerseits zur Vorheizung des Wassers hydraulisch dem Reformer (1) vorgeschaltet ist. Nach der Erfindung ist zur optimalen Einstellung der Katalysatortemperatur vorgesehen, dass dem Wärmetauscher (2) zur Dosierung der Wasserzufuhrmenge ein mit einer übergeordneten Regelungseinrichtung (5) verbundenes Regelventil (4) vorgeschaltet und zwischen dem Wärmetauscher (2) und der Katalysatorstufe (3) ein ebenfalls mit der übergeordneten Regelungseinrichtung (5) verbundener Temperatursensor (6) angeordnet ist.

## Beschreibung

Die Erfindung betrifft ein Verfahren zum Betrieb eines Apparats zur Erzeugung von Wasserstoff gemäß dem Oberbegriff des Anspruchs 1 sowie einen Apparat zur Erzeugung von Wasserstoff gemäß dem Oberbegriff des Anspruchs 3.

Ein gattungsgemäßer Apparat ist beispielsweise nach der DE 100 57 537 A1 bekannt. Dieser Apparat besteht aus einem Reformer mit insgesamt drei nachgeschalteten Katalysatorstufen zur Reduzierung des Kohlenmonoxidanteils im Reformergas. Zwischen den Katalysatorstufen sind Wärmetauscher angeordnet, die dazu dienen, die Temperatur der Reformer-Produkte jeweils auf die für die jeweilige Katalysatorstufe optimale Temperatur einzustellen. Das Produktgas am Ende des Apparats enthält einen hohen Anteil an Wasserstoff und Kohlendioxid und wird einer Brennstoffzelle zur Erzeugung von Strom zugeführt. Im vorliegenden Fall sollen dabei insbesondere solche Reformer betrachtet werden, die für Hausenergieversorgungsanlagen zum Betrieb einer sogenannten Polymermembran-Brennstoffzelle (siehe hierzu beispielsweise das Buch Brennstoffzellen: Entwicklung, Technologie, Anwendung, 2. Auflage, 2001, ISBN 3-7880-7629-1) eingesetzt werden. Der Anteil des als Brennstoffzellenkatalysatorgift wirkenden Kohlenmonoxids im Reformergas wird dabei durch die Katalysatorstufen auf ein für die PEM-Brennstoffzelle geeignetes Maß reduziert.

Zur möglichst maximalen Reduzierung des Kohlenmonoxidanteils kommt es darauf an, dass die Katalysatorstufen jeweils möglichst genau mit der Temperatur betrieben werden, bei der sie eine maximale Reaktivität aufweisen. Dazu müssen die den Katalysatorstufen vorgeschalteten Wärmetauscher jeweils so ausgelegt sein, dass sie dem Reformer-Produktgas möglichst genau soviel Wärme entziehen, dass dieses beim Eintritt in die Shiftstufe (Katalysatorstufe) eine für die katalytische Reaktion optimale Temperatur aufweist.

Bedenkt man dabei, dass die Wärmetauscher stets nur für einen bestimmten Betriebspunkt ausgelegt sind, also nur in diesem Fall tatsächlich auch in der Lage sind, genau die Menge an Wärme abzuführen, die abgeführt werden soll, dann wird schnell klar, dass in allen anderen Betriebszuständen, also beispielsweise wenn brennstoffzellenseitig eine erhöhte Menge an Wasserstoff gefordert wird, die Wärmeabfuhr nicht unter optimalen Bedingungen erfolgt und somit die Reformer-Produkte nicht optimal temperiert in die Katalysatorstufe eintreten, was wiederum zur Folge hat, dass nicht die maximale Menge an Kohlenmonoxid in Kohlendioxid umgewandelt wird.

Der Erfindung liegt also die Aufgabe zugrunde, ein Verfahren und auch einen dazugehörigen Apparat zur Erzeugung von Wasserstoff bereitzustellen, bei dem mit Hilfe eines möglichst einfachen Regelungsmechanismus und entsprechend einfacher konstruktiver Maßnahmen die Temperatur der Reformer-Produkte am Eingang zur Katalysatorstufe auf Katalysatorstufenoptimaltemperatur einstellbar ist.

Diese Aufgabe ist mit einem Verfahren und einem Apparat der eingangs genannten Art durch die im Kennzeichen der Ansprüche 1 und 3 aufgeführten Merkmale verfahrens- und vorrichtungsmässig gelöst.

Zum Verständnis der erfindungsgemäßen Lösung betrachtet man am besten ein Beispiel: Ausgangspunkt sei ein Reformer, der mit einem S/C-Verhältnis (also einem Wasserdampf (Steam) zu Kohlenwasserstoffgas (Carbon) - Verhältnis) von 3,3 betrieben wird. Auslegungsgemäß sei bei diesem S/C-Verhältnis und bei einer entsprechenden Wasserstoffproduktion die Wärmeübertragung am Wärmetauscher optimal, d. h. das zum Reformer strömende Wasser nimmt im Wärmetauscher genau die Wärmemenge auf, die nötig ist, um das vom Reformer kommende Produktgas auf die optimale Katalysatorstufentemperatur zu bringen. Größenordnungsmäßig geht es dabei zum Beispiel um einen Temperatursprung von 600°C auf 235°C.

Wird nun an der Brennstoffzelle mehr elektrische Energie gefordert, muss zumindest die Kohlenwasserstoffgasmenge am Reformereintritt erhöht werden. Unterstellt man, dass es sich um eine nicht allzu massive Leistungsänderung handelt, so ändert sich bei konstant gehaltener Wasserzufuhr über den Wärmetauscher zum Reformer das S/C-Verhältnis beispielsweise auf 3,1, d. h. es ist nach wie vor hinreichend viel Wasser für den Reformierungsprozess vorhanden, bei nahezu gleichem thermodynamischen Gleichgewicht im Produktgasstrom.

Gleichzeitig mit der Erhöhung der Kohlenwasserstoffgasmenge und Beibehaltung der Wasserzufuhrmenge ergibt sich insgesamt ein erhöhter Produktgasstrom, dessen Wärme nach wie vor über den Wärmetauscher an das vorzuheizende Wasser abgeführt werden muss bzw. soll. Da aber der vorherige Betriebszustand als Auslegungspunkt des Wärmetauschers definiert war, ist dieser nicht mehr in der Lage, die mit der Leistungserhöhung verbundene Wärmemengenerhöhung an das Wasser abzuführen. Die Folge hiervon ist, dass das Produktgas mit einer für den katalytischen Prozess in der Katalysatorstufe zu hohen Temperatur in diese eintritt und der Reduzierungsvorgang des Kohlenmonoxidanteils nicht optimal verläuft.

An dieser Stelle setzt nun die Erfindung an, die über die Erfassung der Temperatur am Shiftstufeneingang und über ein entsprechendes Regelventil in der Wasserzufuhrleitung zum Wärmetauscher bei einer Betriebszustandsänderung das S/C-Verhältnis der Eduktströme jeweils so reguliert, dass der Wärmetauscher in den Leistungsbereichen der Brennstoffzelle stets im Auslegungszustand arbeiten kann.

Orientiert am voranstehenden Beispiel heißt das also, dass bei einer Leistungserhöhung nicht nur die Menge an zum Reformer zugeführtem Kohlenwasserstoffgas erhöht wird, sondern, dass gleichzeitig über den Temperatursensor und das Regelventil solange die Wasserzufuhrmenge variiert wird, bis das S/C-Verhältnis wieder so eingestellt ist, dass die Menge an zugeführtem Wasser in der Lage ist, die vom Reformergas für eine optimale Eintrittstemperatur an der Katalysatorstufe abzuführende Wärmemenge aufzunehmen. Nach einer Leistungsänderung bewirkt also ein in der und mit dem Temperatursensor und dem Regelventil verbundener Regelungseinrichtung hinterlegter Regelalgorithmus dafür, dass der Wärmetauscher stets im Auslegungspunkt betrieben wird.

Bei Anlagen mit mehreren Katalysatorstufen (beispielsweise mit sogenannter Hoch- und Niedertemperturshiftstufe und mit nachgeschalteter Selox- oder Methanisierungsstufe - also drei Katalysatorstufen) ist die erfindungsgemäße Lösung auch auf alle Stufen zu erweitern, d. h. nach einer vorteilhaften Weiterbildung ist vorgesehen, dass vor jeder Katalysatorstufe ein Temperatursensor angeordnet ist, der über die Regelungseinrichtung auf jeweils vor den Wärmetauschern angeordnete Regelventile für die Wasserzufuhr Einfluss nimmt. Auf diese Weise ergibt sich eine vollständig ausgeregelte Wasserzufuhr zu den Wärmetauscher, d. h. über die Festlegung der jeweils optimalen Wasserdurchflussmenge pro Wärmetauscher lassen sich die Katalysatorstufen jeweils bei Optimaltemperatur betreiben.

Der Vollständigkeit halber wird noch auf folgenden Stand der Technik hingewiesen:

Bei der Anlage gemäß der DE 199 18 997 C2 ist der Temperatursensor der Shiftstufe (CO-Oxidationsstufe) nachgeschaltet, so dass eine Regelung der Shiftstufeneingangstemperatur nicht möglich ist. Darüber hinaus fehlt dieser Anlage ein Wärmetauscher zur Übertragung von Wärme vom den Reformer-Produkten auf die Reformer-Edukte.

Bei der Anlage gemäß der DE 196 23 937 C1 wird das Eduktmischungsverhältnis bei kurzzeitigen Leistungsänderungen bewußt konstant gehalten, d. h. Änderungen der Shiftstufeneingangstemperatur werden gezielt vernachlässigt.

Bei der Anlage gemäß der DE 196 23 919 C1 soll die Kohlenmonoxid-Konzentration am Reformerausgang möglichst konstant gehalten werden. Die oben erwähnte Problematik bezüglich unterschiedlicher Umwandlungsraten bei verschiedenen Shiftstufeneintrittstemperaturen ist genauso wenig berücksichtigt wie der Einsatz eines Wärmetauschers zur Übertragung von Wärme von den Reformer-Produkten auf die Reformer-Edukte.

In der DE 199 30 051 C2 geht es schließlich um das sogenannte Quenchen, aber nicht darum, wie man die Reformer-Produkte der Shiftstufe mit bezüglich der nachfolgenden Kohlenmonoxidkonvertierung optimaler Temperatur zuführt.

Das erfindungsgemäße Verfahren und der erfindungsgemäße Apparat einschließlich ihrer vorteilhaften Weiterbildungen werden nachfolgend anhand der zeichnerischen Darstellung von zwei Ausführungsbeispielen näher erläutert.

Es zeigt
- Fig. 1: schematisch den erfindungsgemäßen Apparat zur Erzeugung von Wasserstoff mit einer Katalysatorstufe und der Regeleinrichtung für die Wasserzufuhrmenge;
- Fig. 2: schematisch den erfindungsgemäßen Apparat mit mehreren Katalysatorstufen mit jeweils geregelter Wärmeabfuhr aus den vorgeschalteten Wärmetauschern;
- Fig. 3: ein Diagramm zur Veranschaulichung des Verhältnises zwischen der vom Produktgas ans Wasser zu übertragenden Wärmemengen und dem S/C-Verhältnis bei einer Reformerlast von 100%; und
- Fig. 4: das Diagramm gemäß Fig. 3 bei einer Reformerlast von 70%.

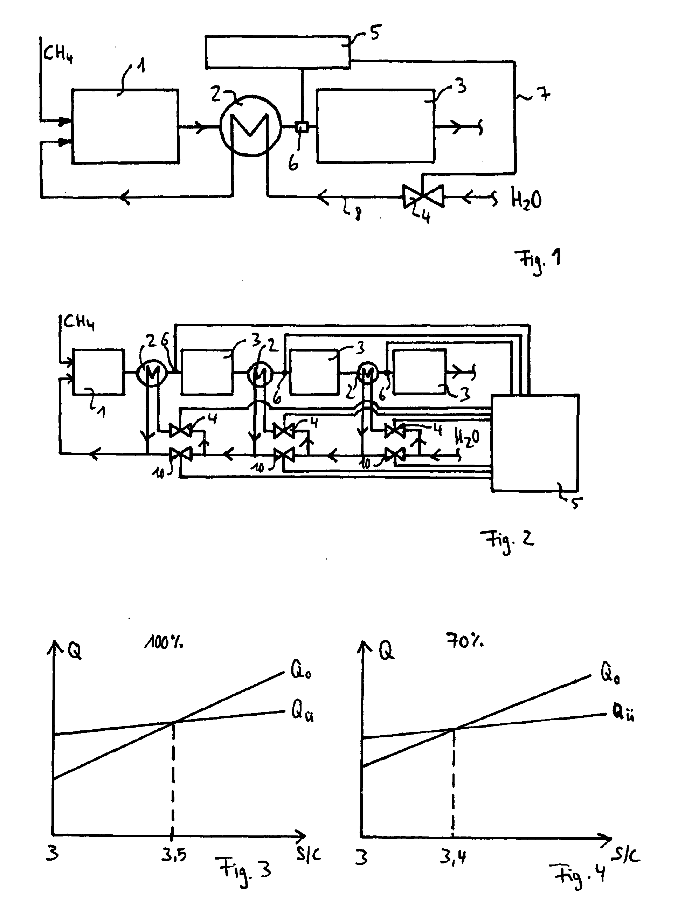

In Fig. 1 ist eine besonders einfache Ausführungsform des erfindungsgemäßen Apparats zur Erzeugung von Wasserstoff dargestellt. Diese Konstruktion umfassend einen Reformer 1 zur Umwandlung von Kohlenwasserstoffgas - hier CH₄- und Wasser H₂O in die Reformer-Produkte Wasserstoff H₂, Kohlendioxid CO₂ und Kohlenmonoxid CO, wobei dem Reformer 1 zur Reduzierung des Kohlenmonoxidanteils (bei diesem Ausführungsbeispiel genau) eine Katalysatorstufe 3 nachgeschaltet und wobei zur Regulierung der Temperatur der Reformer-Produkt zwischen dem Reformer 1 und der Katalysatorstufe 3 ein Wärmetauscher 2 angeordnet ist, der seinerseits zur Vorheizung des Wassers hydraulisch dem Reformer 1 vorgeschaltet ist.

Für diesen Apparat ist nun wesentlich, dass dem Wärmetauscher 2 zur Dosierung der Wasserzufuhrmenge ein mit einer übergeordneten Regelungseinrichtung 5 verbundenes Regelventil 4 vorgeschaltet und zwischen dem Wärmetauscher 2 und der Katalysatorstufe 3 ein ebenfalls mit der übergeordneten Regelungseinrichtung 5 verbundener Temperatursensor 6 angeordnet ist.

Der dargestellte Apparat funktioniert, wie folgt: Über eine zunächst zum Regelventil 4 führende Leitung wird dem Apparat Wasser zugeführt. Mittels des Regelventils 4 wird dabei die Wassermenge dosiert, wobei das Regelventil 4 über eine Steuerleitung 7 mit der Regelungseinrichtung 5 verbunden ist. Nach Passage des Regelventil 4 gelangt das Wasser über eine Zufuhrleitung 8 zum Wärmetauscher 2. Dort nimmt das Wasser die vom Reformergas (im wesentlichen Wasserstoff, Kohlendioxid und Kohlenmonoxid) abgegebene Wärme auf, da dieses vom Reformer mit etwa 600°C kommend vor dem Eintritt in die Katalysatorstufe 3 auf etwa 240°C abgekühlt werden muss, damit dort der katalytische Prozess unter optimalen Bedingungen abläuft. Das Wasser wird dabei spätestens im Wärmetauscher 2 vollständig verdampft, um anschließend in diesem Aggregatzustand dem Reformer 1 zugeführt zu werden. Gleichzeitig wird dem Reformer 1 Kohlenwasserstoffgas zugeführt, so dass im in der Regel mit einem Gasbrenner beheizten Reformer 1 die Reformierungsreaktionen (sogenannte Dampfreformierung) CH₄ + H₂O ⇔ H₂ + CO bzw. CH₄ + 2H₂O ⇔ 4H₂ + CO₂ stattfindet.

Nach der Reformierung gelangt das Prozessgas, wie bereits erwähnt, in den Wärmetauscher 2, um dort große Teile seine Wärme an das vorzugsweise im Gegenstromprinzip durch den Wärmetauscher 2 strömende Wasser abzugeben. Im Übergangsbereich zwischen Wärmetauscher 2 und Shift- bzw. Katalysatorstufe 3 ist ein Temperatursensor 6 angeordnet, um sicherzustellen, dass das Prozessgas dort mit der für den Reinigungsprozess richtigen Temperatur eintritt. Der Temperatursensor 6 ist ebenfalls mittels einer Steuerleitung 9 mit der Regeleinrichtung 5 verbunden. Ist die Temperatur am Wärmetauscherausgang aufgrund einer Betriebszustandsänderung beispielsweise zu hoch, wird über die Regeleinrichtung 5 das Regelventil 4 betätigt um durch eine erhöhte Wasserzufuhr (bei entsprechender Erhöhung des S/C-Verhältnisses) am Wärmetauscher 2 mehr Wärme aus dem Produktgas abführen zu können. Bei einer zu geringen Temperatur am Katalysatorstufeeingang wird die Wassermenge zum Kühlen entsprechend reduziert, d. h. die Komponenten Regeleinrichtung 5, Temperatursensor 6 und Regelventil 4 bilden zusammen mit dem Wärmetauscher 2 einen in sich geschlossenen Regelkreis, der auf Betriebszustandsänderung wie Leistungserhöhungen oder -reduzierungen jeweils sofort über die Änderung des S/C-Verhältnisses reagiert und damit sicherstellt, dass in der Katalysatorstufe jeweils die optimale Temperatur herrscht.

In Fig. 2 ist ebenfalls ein Apparat zur Erzeugung von Wasserstoff zum Betrieb von Brennstoffzellen dargestellt, diesmal allerdings (und dies entspricht dem typischen Aufbau einer solchen Anlage) mit mehreren Katalysatorstufen, um eine hohe Reinheit (also wenig Kohlenmonoxid) des Prozessgases zu gewährleisten. Wesentlich für den dargestellt Apparat ist nun, dass bei Verwendung mehrerer Katalysatorstufen 3 jedem Wärmetauscher 2 ein mit der übergeordneten Regelungseinrichtung 5 verbundenes Regelventil 4 vorgeschaltet und dass vor jeder Katalysatorstufe 3 ein ebenfalls jeweils mit der übergeordneten Regelungseinrichtung 5 verbundener Temperatursensor 6 angeordnet ist. Auf diese Weise ist sichergestellt, dass die jeweiligen Katalysatorstufeneingangstemperaturen auslegungsgemäß eingehalten werden. Orientiert an der DE 100 57 537 A1 wären dies beispielsweise Temperaturniveaus von 400°C, 200°C und 100°C an den dem Reformer 1 nachgeschalteten Shiftstufen (Hochtemperatur- und Niedertemperturshiftstufe sowie beispeilsweise SelOx-Stufe).

Zur möglichst genauen Wassermengendosierung ist dabei vorgesehen, dass die Hauptzufuhrwasserleitung einerseits über das Regelventil 4 mit dem ersten Wärmetauscher 2 verbundenen ist. Andererseits führt die Hauptzufuhrleitung auch noch zu einem weiteren Regelventil 10, das dazu dient, zusammen mit dem anderen Regelventil 4 den Gesamtwasservolumenstrom festzulegen.

Vor den beiden weiteren Wärmetauschern 2 ist, wie aus Fig. 2 ersichtlich, die gleiche Ventilschaltung vorgesehen, so dass mit insgesamt drei Temperatursensoren 6 (vorzugsweise Thermoelemente), mindestens drei (vorzugsweise sechs) Regelventilen 4, 10 und einer Regeleinrichtung 5 ein hoch präzise funktionierendes Temperaturmanagement und damit eine opitmale Prozessgasreinigung gewährleistet ist.

Zum weiteren Verständnis der genauen Zusammenhänge zwischen S/C-Verhältnis und Auslegungspunkt des Wärmetauschers wird noch auf die beiden Fig. 3 und 4 verwiesen: In Fig. 3 ist der Lastfall 100% dargestellt, d. h. der Apparat liefert genau die Menge an Wasserstoff, die maximal in der Brennstoffzelle umgesetzt werden soll bzw. werden kann. In diesem Betriebszustand liegt bei diesem Beispiel ein S/C-Verhältnis von 3,5 vor, d. h. 3,5 Teile Wasser werden mit 1 Teil Kohlenwasserstoffgas im Reformer zu Wasserstoff, Kohlendioxid und Kohlenmonoxid umgesetzt. Für diesen Betriebszustand sei der Wärmetauscher 2 optimal ausgelegt. Die vom Wärmetauscher über das Wasser abgeführte Wärmemenge Qü ist also gleich der vom Produktgas über den Wärmetauscher 2 abzuführenden Wärme Qo, damit dieses mit der optimalen Temperatur in die nächste Katalysatorstufe einströmt.

Verringert sich nun die Last an der Brennstoffzelle auf beispielsweise 70%, muss am Reformer die Kohlenwasserstoffgaszufuhr entsprechend reduziert werden. Hierdurch würde aber gleichzeitig (auch wenn die zugeführte Wassermenge zunächst unverändert beibehalten würde) auch die am Wärmetauscher abzuführende Wärmemenge geringer werden, was bei unveränderter Wasserzufuhr zum Wärmetauscher zu einer Unterkühlung des Produktgases führen würde. Um dies zu vermeiden, wird über das Regelventil 4 die Wasserzufuhrmenge im Zusammenspiel mit dem Temperatursensor 6 gerade soweit reduziert (und damit entsprechend das S/C-Verhältnis), dass die dem Wärmetauscher zugeführte Wassermenge das Prozessgas wieder auf Optimaltemperatur abkühlt und der Wärmetauscher wieder genau in seinem Auslegungspunkt arbeitet, in dem die vom Produktgas abzuführende Wärme genau der vom Wasser aufgenommenen entspricht.

### Bezugszeichenliste

- 1: Reformer
- 2: Wärmetauscher
- 3: Katalysatorstufe
- 4: Regelventil
- 5: Regelungseinrichtung
- 6: Temperatursensor
- 7: Steuerleitung
- 8: Zufuhrleitung
- 9: Steuerleitung
- 10: Regelventil

## Patentansprüche

1. Verfahren zum Betrieb eines Apparats zur Erzeugung von Wasserstoff,
bei dem einem Reformer (1) als Edukte Kohlenwasserstoffgas und Wasser in einem bestimmten, sogenannten "Steam to Carbon"-Verhältnis (S/C-Verhältnis) zugeführt und im Reformer (1) zu Reformer-Produkten Wasserstoff, Kohlendioxid und Kohlenmonoxid umgesetzt werden,
bei dem dem Reformer (1) zur Regulierung der Reformer-Produkt-Temperatur ein Wärmetauscher (2) nachgeschaltet ist,
bei dem die Reformer-Produkte nach Passage des Wärmetauschers (2) zur Reduzierung des Kohlenmonoxidanteils einer Katalysatorstufe (3) zugeführt werden, und
bei dem das dem Reformer (1) zugeführte Wasser mittels des zwischen Reformer (1) und Katalysatorstufe (3) angeordneten Wärmetauschers (2) vorgeheizt wird,
**dadurch gekennzeichnet,**
**dass** die Wasserzufuhrmenge zum Wärmetauscher (2) über ein Regelventil (4) dosierbar ist, das regelungstechnisch mit einer übergeordneten Regelungseinrichtung (5) in Verbindung steht, die in Abhängigkeit von der mittels eines zwischen dem Wärmetauscher (2) und der Katalysatorstufe (3) angeordneten Temperatursensors (6) ermittelten Reformer-Produkt-Temperatur und unter Beeinflussung des S/C-Verhältnisses das Regelventil (4) der Wasserzufuhr betätigt.

2. Verfahren nach Anspruch 1,
**dadurch gekennzeichnet,**
**dass** bei Verwendung mehrerer Katalysatorstufen (3) die Wasserzufuhrmenge zu jedem Wärmetauscher (2) über jeweils ein separates Regelventil (4) dosierbar ist, wobei diese Regelventile (4) regelungstechnisch mit der übergeordneten Regelungseinrichtung (5) verbunden sind, die in Abhängigkeit von der jeweils vor der jeweiligen Katalysatorstufe (3) mittels eines Temperatursensors (6) ermittelten Reformer-Produkt-Temperatur die Regelventile (4) betätigt.

3. Apparat zur Erzeugung von Wasserstoff, umfassend einen Reformer (1) zur Umwandlung von Kohlenwasserstoffgas und Wasser in die Reformer-Produkte Wasserstoff, Kohlendioxid und Kohlenmonoxid, wobei dem Reformer (1) zur Reduzierung des Kohlenmonoxidanteils mindestens eine Katalysatorstufe (3) nachgeschaltet und wobei zur Regulierung der Temperatur der Reformer-Produkt zwischen dem Reformer (1) und der Katalysatorstufe (3) ein Wärmetauscher (2) angeordnet ist, der seinerseits zur Vorheizung des Wassers hydraulisch dem Reformer (1) vorgeschaltet ist,
**dadurch gekennzeichnet,**
**dass** dem Wärmetauscher (2) zur Dosierung der Wasserzufuhrmenge ein mit einer übergeordneten Regelungseinrichtung (5) verbundenes Regelventil (4) vorgeschaltet und zwischen dem Wärmetauscher (2) und der Katalysatorstufe (3) ein ebenfalls mit der übergeordneten Regelungseinrichtung (5) verbundener Temperatursensor (6) angeordnet ist.

4. Apparat nach Anspruch 3,
**dadurch gekennzeichnet,**
**dass** bei Verwendung mehrerer Katalysatorstufen (3) jedem Wärmetauscher (2) ein mit der übergeordneten Regelungseinrichtung (5) verbundenes Regelventil (4) vorgeschaltet und vor jeder Katalysatorstufe (3) ein ebenfalls jeweils mit der übergeordneten Regelungseinrichtung (5) verbundener Temperatursensor (6) angeordnet ist.

5. Apparat nach Anspruch 3 oder 4,
**dadurch gekennzeichnet,**
**dass** der Temperatursensor (6) als Thermoelemente ausgebildet ist.

6. Apparat nach Anspruch 4 oder 5,
**dadurch gekennzeichnet,**
**dass** vor jedem Wärmetauscher (2) zur prozentualen Aufteilung der Wasserzufuhrmenge in einen Wärmetauscher- und einen Bypassanteil ein oder mehrere mit der Regeleinrichtung (5) verbundene Regelventile (4, 10) vorgesehen sind.
